# FASCICULE DE BREVET EUROPEEN

(11) **EP 0 961 880 B1**
(45) Date de publication et mention de la délivrance du brevet: **12.06.2002**
(21) Numéro de dépôt: 98909405.7
(22) Date de dépôt: 06.02.1998
(51) Int. Cl.: F02M 25/08

(54) **PROCEDE ET DISPOSITIF DE REGENERATION D'UN FILTRE A VAPEURS DE CARBURANT POUR UN MOTEUR A INJECTION DIRECTE**
VERFAHREN UND VORRICHTUNG ZUM REGENERIEREN EINES ADSORPTIONSFILTERS FÜR EINE BRENNKRAFTMASCHINE MIT DIREKTEINSPRITZUNG
METHOD AND DEVICE FOR REGENERATING A FUEL VAPOUR FILTER FOR A DIRECT INJECTION ENGINE

(30) Priorité: 07.02.1997 FR 9701593
(43) Date de publication de la demande: 08.12.1999
(73) Titulaire: Siemens VDO Automotive S.A.S., 31036 Toulouse cedex 01 (FR)
(72) Inventeur: ATANASYAN, Alain, F-31820 Pibrac (FR)
(74) Mandataire: Berg, Peter
(86) Numéro de dépôt international: EP9800666
(87) Numéro de publication internationale: WO9835154

(56) Documents cités:
- EP-A- 0 488 254
- WO-A-91/13251
- DE-A- 4 316 728
- DE-A- 19 547 916
- DE-C- 19 617 386
- US-A- 5 273 020

## Description

La présente invention concerne un procédé et un dispositif de régénération d'un filtre à vapeurs de carburant pour un moteur à injection directe.

Il est déjà connu de munir les véhicules automobiles de filtres à vapeurs de carburant. Ces filtres sont chargés de recueillir et de stocker les vapeurs de carburant présentes dans le réservoir du véhicule. La création de ces vapeurs peut être due à de nombreux facteurs, par exemple, le fait que le véhicule a un réservoir partiellement rempli et séjourne en plein soleil. Ces vapeurs peuvent encore être dues au fait que lors du fonctionnement du véhicule, du carburant est envoyé en excès vers la rampe d'injection. Ce carburant en excès se réchauffe au contact du moteur puis retourne vers le réservoir. Son introduction dans le réservoir crée des vapeurs de carburant.

Les normes en vigueur exigent que les véhicules n'émettent pas de vapeurs de carburant. A cet effet, un filtre à charbon actif est associé au réservoir de manière à recueillir toutes vapeurs de carburant. Bien entendu, pour que ce filtre fonctionne de manière optimum, il convient de le régénérer lorsqu'il est saturé.

Le but de la présente invention est de régénérer un tel filtre, mis en place sur un moteur à injection directe.

Lorsque ce filtre est mis en place sur un moteur à injection indirecte classique, les vapeurs de carburant sont amenées vers la tubulure d'admission en amont des cylindres. Là, ces vapeurs se mélangent à l'air et au carburant injecté et sont ensuite aspirées par les cylindres lors de l'ouverture des soupapes d'admission.

Par contre, lorsqu'un tel filtre à vapeur de carburant est mis en place sur un moteur à injection directe, le processus de combustion étant différent, il se pose un problème d'introduction des vapeurs de carburant dans les cylindres.

Pour qu'un moteur à injection directe fonctionne avec un rendement optimal, il est nécessaire qu'il fonctionne le plus souvent possible en combustion dite stratifiée. Dans ce type de combustion, le cylindre est rempli d'air lorsque la soupape d'admission s'ouvre. Du carburant est injecté dans le cylindre au niveau de la bougie de manière à favoriser l'explosion du mélange en ce point. Cependant, plus on s'éloigne de la bougie et plus la richesse du mélange diminue, pour n'être plus que de l'air. Il existe ainsi dans le cylindre une pluralité de couches « strates » présentant des richesses différentes. Les couches situées près de la bougie sont riches en carburant, les couches éloignées sont constituées d'un mélange dit pauvre. Une telle combustion stratifiée permet d'assurer l'explosion du,mélange et d'être en présence, au niveau global du cylindre, d'un excès d'air ce qui diminue fortement les émissions de produits polluants. En outre, ce type de combustion permet de minimiser les quantités de carburant utilisées, donc de diminuer la consommation du moteur.

Or, pour qu'un moteur fonctionne correctement en combustion stratifiée, il est nécessaire d'ouvrir au maximum le papillon d'admission de manière à travailler en excès d'air. De ce fait, la dépression à l'admission est extrêmement restreinte, ce qui complique l'acheminement des vapeurs de carburant vers les cylindres. En effet, sans dépression à l'admission, les vapeurs de carburant ne sont pas correctement aspirées vers les cylindres. Ces vapeurs risquent même de sortir du véhicule en passant par la conduite d'admission en air. Un tel processus conduirait à une pollution accrue, ce qui serait en totale opposition avec le but poursuivi.

Le document EP 0 488 254 (TOYOTA) concerne un moteur à combustion interne du type à injection directe. Ce moteur comporte un filtre à vapeurs de carburant. La régénération de ce filtre est effectuée lorsque le moteur est sous forte charge et fonctionne en combustion homogène pour tous les cylindres. Aucune régénération n'est effectuée lorsque le moteur fonctionne en combustion stratifiée ou sous faible charge ou lorsque le pot catalytique n'a pas atteint sa température de fonctionnement (au démarrage). Il en résulte que le filtre n'est pas régénéré au moment opportun (notamment au démarrage car, pendant tout le temps d'arrêt de fonctionnement, de grandes quantités de vapeurs peuvent s'accumuler dans le filtre). Ce document ne suggère aucune solution satisfaisante permettant la régénération du filtre à vapeurs de carburant pendant le fonctionnement en mode stratifié.

Le but de la présente invention est de créer un procédé de régénération de filtre à vapeurs de carburant pour un moteur à injection directe travaillant en combustion stratifiée. Ce procédé ne doit pas, ou peu, perturber le fonctionnement du moteur et ne pas augmenter la consommation de carburant, qui est l'atout majeur de la combustion stratifiée. L'invention propose également un dispositif correspondant assurant la régénération du filtre sans émissions de vapeurs de carburant directement dans l'atmosphère.

A cet effet, la présente invention concerne un procédé de régénération d'un filtre à vapeurs de carburant pour un moteur à injection directe du type comportant:
- une pluralité de cylindres alimentés directement en carburant,
- un filtre adapté pour recueillir les vapeurs de carburant au niveau d'un réservoir de carburant,
- une conduite d'évacuation des vapeurs de carburant munie d'une vanne d'évacuation, la dite conduite étant munie d'une pompe adaptée pour décharger les vapeurs de carburant stockées dans le filtre et pour amener ces vapeurs vers les cylindres.
Le procédé selon l'invention comporte pendant le fonctionnement du moteur en combustion stratifiée, les étapes suivantes :
- autorisation de l'ouverture de la vanne d'évacuation des vapeurs de carburant, lorsque le taux de saturation du filtre excède un seuil déterminé,
- admission des dites vapeurs, dans au moins l'un des cylindres, et
- combustion homogène de ces vapeurs dans ce cylindre.

La présente invention concerne également un dispositif de régénération d'un filtre à vapeurs de carburant pour un moteur à combustion interne, comportant:
- un filtre à vapeurs de carburant adapté pour stocker des vapeurs de carburant en provenance d'un réservoir à carburant,
- une conduite d'évacuation des vapeurs de carburant, adaptée pour recueillir les vapeurs de carburant en provenance du filtre et pour les amener au voisinage immédiat des cylindres,
- une vanne d'évacuation montée sur la conduite d'évacuation des vapeurs de carburant au voisinage des cylindres, et
- une pompe d'évacuation des vapeurs de carburant adaptée pour faire circuler les dites vapeurs entre le filtre et les cylindres.

Un tel procédé assure une combustion complète des vapeurs de carburant sans perturbation notable du fonctionnement en combustion stratifiée du moteur. De manière avantageuse, le procédé selon l'invention comporte, en outre, des étapes de contrôle du couple moteur et de modification de ce couple pour le cylindre recevant les vapeurs de carburant. En effet, comme ce cylindre (ou ces cylindres) est le siège d'une combustion homogène, et non stratifiée, le couple créé par ce cylindre peut être différent de celui des autres cylindres. A cet effet, lorsque le couple du cylindre recevant les vapeurs de carburant est supérieur à celui des autres cylindres, on gère, par exemple, l'instant d'allumage de la bougie de ce cylindre, pour obtenir un couple analogue à ceux des autres cylindres. Le but est de rendre le fonctionnement en combustion homogène, le moins perturbant possible, pour ces cylindres travaillant en combustion stratifiée.

Il est également possible de modifier la quantité de carburant injecté dans le cylindre à combustion homogène, pour modifier son couple, si celui-ci est trop faible par rapport à celui des autres cylindres.

D'autres objets, caractéristiques et avantages de la présente invention, ressortiront d'ailleurs de la description qui suit, à titre d'exemple non limitatif et en référence aux dessins annexés dans lesquels :
- la figure 1 est une vue schématique d'un moteur à injection directe fonctionnant en combustion stratifiée, et
- la figure 2 est une vue schématique d'un dispositif de régénération de filtre selon l'invention.

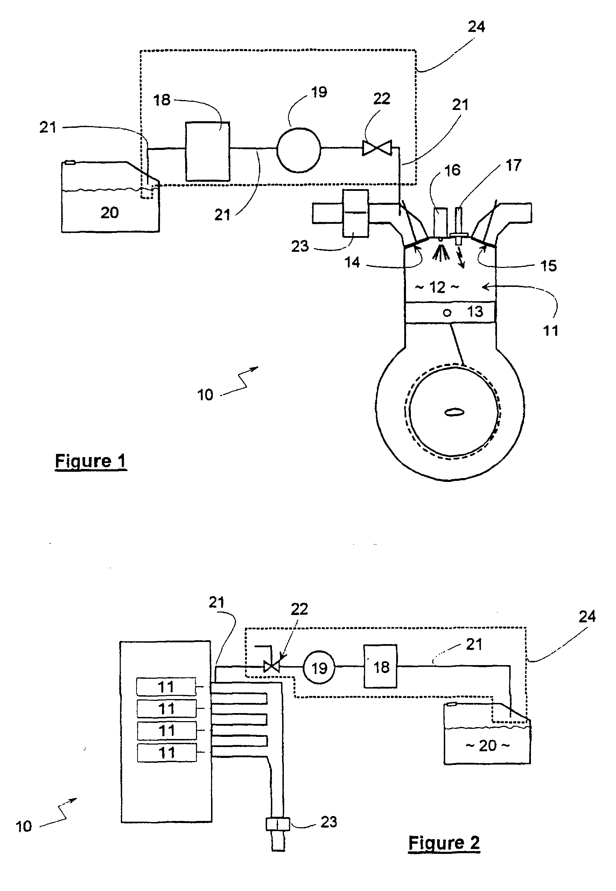

En référence à la figure 1, on va rappeler dans un premier temps le fonctionnement d'un moteur à injection directe de carburant.

Un moteur 10 à injection directe de carburant comporte, de manière classique, une pluralité de cylindres 11 (un seul est représenté à la figure 1).

Chacun de ces cylindres 11 comporte une chambre de combustion 12 et un piston 13 entraînant en rotation un arbre moteur. Des soupapes d'admission 14 et d'échappement 15 permettent de régler le flux d'air et de gaz entrant et sortant dans la chambre du cylindre. Un injecteur de carburant 16 amène une quantité de carburant déterminée, directement dans la chambre de combustion. Une bougie 17 fournit une étincelle, à un moment approprié, pour déclencher l'explosion du mélange. Les gaz brûlés sont ensuite évacués par la soupape d'échappement 15.

Dans le cas d'un moteur à injection directe, on apporte, en fin d'admission d'air, une quantité déterminée de carburant à proximité immédiate de la bougie, de telle sorte que la richesse de cette zone soit plus importante que dans le reste de la chambre de combustion.

La chambre de combustion est ainsi remplie de mélange de moins en moins riche au fur et à mesue, que l'on s'éloigne de la bougie. Il existe donc dans la chambre de combustion une pluralité de couches (strates) de gaz de richesses décroissantes. Lorsque l'étincelle fait exploser le mélange, le front de flamme démarre de la bougie et se propage, par la suite, à l'intérieur de la chambre. La combustion du mélange contenu dans le cylindre s'effectue en présence d'un excès d'air, ce qui garantit une combustion complète du carburant présent dans la chambre de combustion. Une telle combustion est appelée combustion stratifiée.

Dans le cadre d'un moteur à injection directe, il est toujours préférable de travailler en combustion stratifiée, car la pollution est réduite et la consommation de carburant également, alors que le couple moteur est maximal.

Cependant, ce type de combustion entraîne l'obligation de maintenir un papillon des gaz 23 en position pleine ouverte pratiquement en continu. De ce fait, l'aspiration du moteur à l'admission est très limitée.

Lorsque l'on désire régénérer un filtre 18 à vapeur de carburant, il est alors nécessaire de prévoir un système d'aspiration à savoir, une pompe 19.

Le filtre 18 (figure 2) est adapté pour stocker les vapeurs de carburant en provenance d'un réservoir de carburant 20. Ces vapeurs sont amenées vers le filtre par une conduite d'évacuation 21. Sur cette conduite d'évacuation 21 sont également montés la pompe d'évacuation 19 ainsi que la vanne d'évacuation 22. La conduite d'évacuation 21 débouche le plus près possible de la soupape d'admission d'au moins un des cylindres 11.

Lorsque le filtre 18 est saturé, il est nécessaire de le régénérer. A cet effet, le filtre est muni d'une ouverture à l'air libre. La pompe 19 crée une dépression à l'intérieur du filtre. L'air pénètre alors à l'intérieur du filtre et le balaye. Ceci permet de déstocker les vapeurs de carburant piégées par le filtre. Il suffit alors de commander l'ouverture de la vanne d'évacuation 22 pour que les vapeurs de carburant soient introduites dans le cylindre 11.

Selon l'invention, le procédé de régénération du filtre à vapeur de carburant comporte, alors que le moteur fonctionne en combustion stratifiée, les étapes suivantes:
- autorisation de l'ouverture de la vanne d'évacuation lorsque le taux de saturation du filtre est supérieur à une valeur seuil. Cette valeur seuil peut varier entre un taux de saturation de 0% à 100%. Lorsque le taux est fixé à 0%, la régénération du filtre est effectuée en continu, et lorsqu'il est fixé à 100%, cette régénération est effectuée uniquement à pleine saturation du filtre,
- admission des vapeurs de carburant dans au moins un des cylindres. En effet, selon l'invention, on peut choisir un seul et même cylindre qui, à chaque fois qu'une régénération sera à effectuer, recevra les vapeurs de carburant. En variante, chacun des cylindres du moteur devient tour à tour récepteur des vapeurs de carburant. En variante encore, plusieurs cylindres reçoivent en même temps les vapeurs de carburant (mais pas tous les cylindres),
- combustion homogène des vapeurs de carburant présentes dans le cylindre (ou les cylindres) recevant les vapeurs de carburant. Ainsi, alors que les autres cylindres du moteur continuent à travailler en combustion stratifiée, celui (ou ceux ) qui reçoit les vapeurs de carburant assure une combustion homogène du mélange. Une combustion homogène se caractérise par un mélange présentant dans tout le volume de la chambre de combustion, une richesse analogue. Dans ce mode de combustion, il n'existe pas de zone à richesse plus importante.

Pour réaliser une combustion homogène du mélange, il suffit d'injecter le carburant (dosé en fonction de la quantité d'air admise) au moment de l'ouverture de la soupape d'admission. Ainsi, l'air chargé des vapeurs de carburant pénètre à l'intérieur de la chambre, en même temps que le carburant injecté par l'injecteur. Ceci provoque un brassage du mélange contenu dans la chambre. Le mélange obtenu présente une richesse homogène. Après combustion de toutes les vapeurs de carburant en provenance du filtre, le cylindre ayant reçu ces vapeurs fonctionne de nouveau en combustion stratifiée.

L'intérêt de réaliser une combustion homogène du mélange réside dans le fait que l'air entrant dans le cylindre est déjà porteur de carburant et que pour faire brûler ce carburant, il est nécessaire que la combustion du mélange se fasse sur l'ensemble du volume de la chambre de combustion. En effet, si seule une combustion stratifiée avait lieu, le carburant injecté au niveau de la bougie brûlerait, mais celui présent à l'intérieur de la chambre de combustion ne brûlerait que très partiellement. Il en résulterait donc une pollution accrue, car les gaz d'échappement comporteraient des hydrocarbures imbrûlés. En réalisant une combustion homogène dans le cylindre recevant les vapeurs de carburant, on garantit une combustion complète des vapeurs de carburant introduites, et ceci alors que le mélange à l'intérieur de ce cylindre reste globalement pauvre.

Pour que le mode de combustion différent réalisé dans le cylindre recevant les vapeurs de carburant ne perturbe globalement pas le fonctionnement en mode stratifié du reste des cylindres, on contrôle la valeur du couple délivré par le cylindre recevant les vapeurs de carburant. Si ce couple est supérieur à celui des autres cylindres travaillant en mode de combustion stratifiée, on modifie l'instant d'allumage de la bougie du cylindre recevant les vapeurs de carburant pour modifier le couple en conséquence. A cet effet, on avance l'instant d'allumage. Le couple ainsi modifié devient analogue à ceux des autres cylindres. Le fonctionnement du moteur est ainsi très peu perturbé par le fonctionnement du cylindre recevant les vapeurs de carburant. Dans le cas où le couple délivré par le cylindre recevant les vapeurs est inférieur aux couples délivrés par les autres cylindres, on enrichit le mélange en modifiant la durée de l'injection. Ainsi, on évite que le fonctionnement en combustion homogène d'un cylindre ne perturbe le couple moteur résultant.

La gestion du couple du moteur s'effectue ainsi par la gestion de l'instant d'allumage, ou par la gestion de la durée d'injection.

On notera également que le basculement du mode de fonctionnement des cylindres (homogène ou stratifiée) est effectuée par la gestion de l'instant d'injection du carburant.

Afin de mettre en oeuvre le procédé selon l'invention, le dispositif de régénération du filtre est quelque peu modifié par rapport à un dispositif classique, tels que ceux utilisés dans les moteurs à injection indirecte.

Le dispositif 24 selon l'invention comporte notamment une pompe d'évacuation 19. En outre, l'extrémité de la conduite d'évacuation 21 (figure 2) est la plus proche possible de la soupape d'admission du cylindre recevant les vapeurs de carburant.

Lorsque ce cylindre est choisi une fois pour toutes, (cas représenté à la figure 2), la conduite 21 arrive dans la tubulure d'admission de ce cylindre.

Lorsque plusieurs cylindres, déterminés une fois pour toutes, peuvent recevoir simultanément, ou non, les vapeurs de carburant, la conduite d'évacuation 21 présente une extrémité au niveau de chacun de ces cylindres. Le cas échéant chacune de ces extrémités peut être munie d'une vanne d'évacuation.

Lorsque chacun des cylindres peut devenir, de manière cyclique, récepteur des vapeurs de carburant, la conduite d'évacuation présente autant d'extrémités que de cylindres.

On notera que la vanne d'évacuation 22 peut être une vanne à ouverture proportionnelle ou une vanne dont l'ouverture et la fermeture sont synchrones avec celles de la soupape du (ou des) cylindre(s) récepteur de vapeurs de carburant.

Bien entendu, la présente invention n'est pas limitée aux modes de réalisation ci-dessus décrits. Ainsi, la pompe d'évacuation pourrait être disposée en amont du filtre à vapeurs de carburant, si elle était munie d'une bouche d'aspiration de l'air ambiant.

## Revendications

1. Procédé de régénération d'un filtre à vapeurs de carburant pour un moteur à injection directe du type comportant:
- une pluralité de cylindres (11) alimentés directement en carburant,
- un filtre (18) adapté pour recueillir les vapeurs de carburant au niveau d'un réservoir de carburant (20),
- une conduite d'évacuation (21) des vapeurs de carburant munie d'une vanne d'évacuation (22), la dite conduite étant munie d'une pompe adaptée pour décharger les vapeurs de carburant stockée dans le filtre et pour amener ces vapeurs vers les cylindres (11),
le dit procédé étant **caractérisé en ce qu'**il comporte, pendant le fonctionnement du moteur en combustion stratifiée, les étapes suivantes:
- autorisation de l'ouverture de la vanne d'évacuation (22) des vapeurs de carburant, lorsque le taux de saturation du filtre (18) excède un seuil déterminé,
- admission des dites vapeurs, dans au moins l'un des cylindres (11) mais pas dans tous les cylindres en même temps, et
- combustion homogène de ces vapeurs dans ce cylindre.

2. Procédé selon la revendication 1, **caractérisé en ce qu'**il comporte en outre les étapes suivantes :
- contrôle de la valeur du couple délivré par le cylindre (11) recevant les vapeurs de carburant,
- gestion de l'instant d'avance à l'allumage du cylindre recevant les vapeurs de carburant, et/ou de la durée d'injection du carburant pour que le couple délivré par ce cylindre soit analogue à ceux des autres cylindres.

3. Procédé selon la revendication 1 ou 2, **caractérisé en ce qu'**il consiste à admettre les vapeurs de carburant dans un seul et même cylindre.

4. Procédé selon l'une quelconque des revendications précédentes **caractérisé en ce que** le cylindre recevant les vapeurs de carburant est déterminé de façon cyclique, chaque cylindre recevant l'un après l'autre les dites vapeurs.

5. Procédé selon l'une quelconque des revendications précédentes, **caractérisé en ce que** l'on réalise une combustion homogène en gérant l'instant d'injection du carburant.

6. Dispositif de régénération d'un filtre (18) à vapeurs de carburant pour un moteur à combustion interne, **caractérisé en ce qu'**il comporte :
- un filtre (18) à vapeurs de carburant adapté pour stocker des vapeurs de carburant en provenance d'un réservoir à carburant (20),
- une conduite d'évacuation (21) des vapeurs de carburant, adaptée pour recueillir les vapeurs de carburant en provenance du filtre (18) et pour les amener au voisinage immédiat des cylindres (11),
- une vanne d'évacuation (22) montée sur la conduite d'évacuation des vapeurs de carburant au voisinage des cylindres,
- et une pompe d'évacuation (19) des vapeurs de carburant adaptée pour faire circuler les dites vapeurs entre le filtre et les cylindres lorsque l'ouverture de la vanne de saturation (22) est autorisée, l'introduction des vapeurs ayant lieu pendant le fonctionnement du moteur en combustion stratifiée dans au moins l'un des cylindres (11), mais pas dans tous les cylindres en même temps et combustion homogène de ces vapeurs dans ce cylindre.

7. Dispositif selon la revendication 6, **caractérisé en ce que** la dite vanne d'évacuation (22) est adaptée pour s'ouvrir et se fermer de manière synchrone avec une soupape d'admission (14) du cylindre recevant les vapeurs de carburant.

8. Dispositif de circulation selon la revendication 6, **caractérisé en ce que** la vanne d'évacuation (22) est une vanne à ouverture proportionnelle.

## Patentansprüche

1. Verfahren zum Regenerieren eines Kraftstoffdampffilters für eine Brennkraftmaschine mit Direkteinspritzung einer Bauart, die aufweist:
- mehrere Zylinder (11), die direkt mit Kraftstoff versorgt werden,
- ein Filter (18) zur Aufnahme des Kraftstoffdampfs auf Höhe eines Kraftstoffspeichers (20),
- eine Kraftstoffdampf-Ablassleitung (21), die mit einem Ablassventil (22) versehen ist, wobei diese Leitung mit einer Pumpe versehen ist, die zum Abführen des im Filter gespeicherten Kraftstoffdampfes und zum Zuführen dieses Dampfes zu den Zylindern (11) dient,
wobei das Verfahren **dadurch gekennzeichnet ist, dass** es während des Betriebs der Brennkraftmaschine mit Schichtverbrennung die folgenden Schritte aufweist:
- Öffnen des Kraftstoffdampf-Ablassventils (22), wenn das Sättigungsverhältnis des Filters (18) eine vorgegebene Schwelle überschreitet,
- Einlassen dieses Kraftstoffdampfes in mindestens einen der Zylinder (11), jedoch nicht in alle Zylinder zur gleichen Zeit und
- homogene Verbrennung dieses Kraftstoffdampfes in diesem Zylinder.

2. Verfahren nach Anspruch 1, **dadurch gekennzeichnet, dass** es ferner die folgenden Schritte aufweist:
- Überwachen des Wertes des Drehmomentes, das von dem den Kraftstoffdampf empfangenden Zylinder (11) abgegeben wird,
- Steuern des Zündvorsteuer-Zeitpunktes des den Kraftstoffdampf empfangenden Zylinders und/oder der Kraftstoffeinspritzdauer, damit das von diesem Zylinder abgegebene Drehmoment dem der anderen Zylinder entspricht.

3. Verfahren nach Anspruch 1 oder 2, **dadurch gekennzeichnet, dass** es darin besteht, dass der Kraftstoffdampf in ein und denselben Zylinder eingelassen wird.

4. Verfahren nach einem der vorhergehenden Ansprüche, **dadurch gekennzeichnet, dass** der den Kraftstoffdampf empfangende Zylinder zyklisch bestimmt wird, wobei jeder Zylinder einer nach dem anderen den Kraftstoffdampf empfängt.

5. Verfahren nach einem der vorhergehenden Ansprüche, **dadurch gekennzeichnet, dass** eine homogene Verbrennung durch Steuern des Kraftstoffeinspritzzeitpunktes erzielt wird.

6. Vorrichtung zum Regenerieren eines Kraftstoffdampffilters (18) für eine Brennkraftmaschine, **dadurch gekennzeichnet, dass** sie aufweist:
- ein Kraftstoffdampffilter (18) zum Speichern von Kraftstoffdampf, der aus einem Kraftstoffspeicher (20) kommt,
- eine Kraftstoffdampf-Ablassleitung (21) zur Aufnahme des vom Filter (18) kommenden Kraftstoffdampfes und zum Zuführen desselben in unmittelbare Nähe der Zylinder (11),
- ein Ablassventil (22), das an der Kraftstoffdampf-Ablassleitung in Nähe der Zylinder angebracht ist,
- und eine Kraftstoffdampf-Ablasspumpe (19) zum Fördern des Kraftstoffdampfes zwischen dem Filter und den Zylindern, während die Öffnung des Ablassventils (22) freigegeben ist, wobei der Kraftstoffdampf während des Schichtbetriebes der Brennkraftmaschine in mindestens einen der Zylinder (11) eingeführt wird, jedoch nicht gleichzeitig in alle Zylinder, und wobei eine homogene Verbrennung dieses Kraftstoffdampfes in diesem Zylinder erfolgt.

7. Vorrichtung nach Anspruch 6, **dadurch gekennzeichnet, dass** das Ablassventil (22) so ausgebildet ist, dass es synchron zu dem Einlassventil (14) des den Kraftstoffdampf empfangenden Zylinders öffnet und schließt.

8. Vorrichtung nach Anspruch 6, **dadurch gekennzeichnet, dass** das Ablassventil (22) ein proportional öffnendes Ventil ist.

## Claims

1. A method of regenerating a fuel vapour filter for a direct injection engine of the type which includes:
- a plurality of cylinders (11) directly supplied with fuel,
- a filter (18) suitable for collecting fuel vapour from a fuel tank (20),
- a fuel vapour discharge duct (21) fitted with a discharge valve (22), this duct being fitted with a pump suitable for discharging the fuel vapour stored in the filter and sending this vapour to the cylinders (11),
this method being **characterised in that** it comprises the following stages when the engine is operating in stratified combustion:
- authorising the fuel vapour discharge valve (22) to open when the saturation level of the filter (18) exceeds a particular threshold,
- admitting the vapour concerned into at least one of the cylinders (11) but not all cylinders at once, and
- burning this vapour in the cylinder concerned using homogeneous combustion.

2. Method according to Claim 1, **characterised in that** it also comprises the following stages:
- supervising the value of the torque delivered by the cylinder (11) receiving the fuel vapour,
- adjusting the timing of the ignition advance on the cylinder receiving the fuel vapour, and/or the duration of the fuel injection, so that the torque delivered by the cylinder concerned is comparable to that of the other cylinders.

3. Method according to Claim 1 or 2, **characterised in that** it consists of admitting the fuel vapour into one and the same cylinder.

4. Method according to any of the preceding claims, **characterised in that** the cylinder receiving the fuel vapour is determined cyclically, each cylinder receiving the vapour in turn.

5. Method according to any of the preceding claims, **characterised in that** homogeneous combustion is produced by adjusting the instant at which the fuel is injected.

6. A device for regenerating a fuel vapour filter (18) for an internal combustion engine, **characterised in that** it comprises:
- a fuel vapour filter (18) suitable for storing fuel vapour from a fuel tank (20),
- a fuel vapour discharge duct (21) suitable for collecting fuel vapour from the filter (18) and sending it to a location close to the cylinders (11),
- a discharge valve (22) fitted to the fuel vapour discharge duct near the cylinders,
- and a fuel vapour discharge pump (19) suitable for moving the vapour in question between the filter and the cylinders when the saturation valve (22) is authorised to open, the vapour being introduced into at least one of the cylinders (11) while the engine is operating in stratified combustion mode, but not into all the cylinders at once, and combustion of this vapour taking place in the cylinder concerned in homogeneous combustion mode.

7. Device according to Claim 6, **characterised in that** the discharge valve (22) is adapted to open and close synchronously with an inlet valve (14) on the cylinder receiving the fuel vapour.

8. Circulation device according to Claim 6, **characterised in that** the discharge valve (22) opens proportionally.
